# EUROPÄISCHE PATENTSCHRIFT

(11) **EP 0 436 701 B1**
(45) Veröffentlichungstag und Bekanntmachung des Hinweises auf die Patenterteilung: **09.03.1994**
(21) Anmeldenummer: 90911611.3
(22) Anmeldetag: 27.07.1990
(51) Int. Cl.: G03B 17/12

(54) **VORSATZGERÄT FÜR KAMERAS**
ATTACHMENT FOR CAMERAS
ACCESSOIRE POUR CAMERAS

(30) Priorität: 03.08.1989 DE 3925666
(43) Veröffentlichungstag der Anmeldung: 17.07.1991
(73) Patentinhaber: Rapp, Eugen, D-28816 Stuhr (DE)
(72) Erfinder: Rapp, Eugen, D-28816 Stuhr (DE)
(74) Vertreter: Eisenführ, Speiser & Partner
(86) Internationale Anmeldenummer: EP9001228
(87) Internationale Veröffentlichungsnummer: WO9102284

(56) Entgegenhaltungen:
- DE-A- 2 901 982

## Beschreibung

Die Erfindung betrifft ein Vorsatzgerät mit einem Gehäuse, durch das sich eine zylindrische Gehäuseöffnung hindurcherstreckt, deren Durchmesser mindestens dem Durchmesser des Objektives der Kamera entspricht, mit einem die Gehäuseöffnung verschließenden, drehbar gelagerten transparenten Schutzelement, mit einem einen Elektromotor aufweisenden Antrieb zum Antreiben des Schutzelements in eine Drehbewegung, mit einem Befestigungselement zum Befestigen des Vorsatzgeräts an der Kamera in einer Position, in der die Gehäuseöffnung mit dem Kameraobjektiv fluchtet, und mit einer Fassung am Rand des Schutzelements.

Ein derartiges Vorsatzgerät ist aus der DE-A 29 01 982 bekannt, dessen transparentes Schutzelement in eine rasche Drehbewegung versetzt wird, bei der flüssige oder feste Niederschläge, Staubpartikel etc. auf dem Schutzelement zentrifugal nach außen weggeschleudert werden, so daß die Oberfläche des Schutzelements stets frei von Tropfen, Schlieren oder Schnee bzw. Schmutzpartikeln ist. Dadurch lassen sich auch bei stärkeren Niederschlägen oder bei Schneetreiben etc. scharfe Aufnahmen machen. An diesem bekannten Vorsatzgerät ist außen ein Elektromotor befestigt, der an seiner Welle ein Antriebsglied in Form eines Reibrades aufweist, welches auf die Fassung des Schutzelementes wirkt und dieses antreibt. Das Vorsatzgerät besitzt wegen des Elektromotors eine unsymmetrische Gestalt, wodurch die Handhabung der Kamera beeinträchtigt werden kann. Außerdem muß der Elektromotor und das zwischen Motorwelle und der Fassung des Schutzelements wirkende Antriebsglied gegen Witterungseinflüsse geschützt werden, um den bestimmungsgemäßen Einsatz des Vorsatzgerätes bei den verschiedensten Witterungsbedingungen gewährleisten zu können, und ein derartiger Witterungsschutz erhöht zusätzlich das Gewicht und das Volumen des Vorsatzgerätes.

Aufgabe der Erfindung ist es demgegenüber, ein Vorsatzgerät der eingangs genannten Art derart weiterzubilden, daß eine möglichst raumsparende und rotationssymmetrisch gestaltete Anordnung verwirklicht wird, die bei möglichst geringem Gewicht unter allen Witterungsbedingungen sicher und zuverlässig arbeitet.

Diese Aufgabe wird bei dem Vorsatzgerät der eingangs genannten Art erfindungsgemäß dadurch gelöst, daß die Fassung des Schutzelements als Läufer des Elektromotors ausgebildet ist, und daß die Statorwicklung des Elektromotors um die Fassung des Schutzelements herum am Gehäuse befestigt ist.

Die Vorteile der Erfindung liegen insbesondere darin, daß die Fassung des Schutzelements gleichzeitig der Läufer des Elektromotors ist, und daß die Statorwicklung des Elektromotors um diese Fassung am Gehäuse angeordnet ist. Die Form des Vorsatzgerätes ist dadurch der Rotationssymmetrie des Kameraobjektivs ideal angepaßt, das Vorsatzgerät kann mittels eines geeigneten Befestigungselements an der Kamera, also am Kameragehäuse oder direkt am Kameraobjektiv, befestigt werden, um die äußere Linse des Objektivs gegen feste oder flüssige Niederschläge abzuschirmen und um die unerwünschten Partikel oder Niederschläge von dem Schutzelement zentrifugal nach außen zu schleudern, wenn das transparente Schutzelement von dem Elektromotor in eine ausreichend schnelle Drehbewegung versetzt wird. Die erfindungsgemäße ringförmige Ausbildung des Elektromotors, dessen Läufer zentral das transparente Schutzelement enthält, ermöglicht einen symmetrischen, raumsparenden, sicher und zuverlässig funktionierenden und handhabbaren Aufbau, der in seiner Form ideal der Rotationssymmetrie des Kameraobjektivs entspricht und in einfacher Weise vor dem Kameraobjektiv angeordnet werden kann.

Besonders bevorzugt sitzt das Schutzelement mittels der Fassung zentral in dem Innenring eines Kugellagers, dessen Außenring in der Wandung des Gehäuses befestigt ist, welche die Statorwicklungen trägt. Bei dieser Ausführungform dient ein Innenring des Kugellagers als Rotor, der an seinem Außenumfang mittels einer Kugellagerung präzise relativ zum Stator gelagert ist. Zusätzliche Lagermittel können dadurch entfallen.

Das Schutzelement kann erfindungsgemäß als ebene Glasscheibe oder als Linse oder als Filter ausgebildet sein.

Erfindungsgemäß kann frontseitig an der Fassung des Schutzelements ein Filtergewinde vorgesehen werden, welches demjenigen des Objektivs entpricht und zur Aufnahme von geeigneten Filtern dient.

Vorteilhafte Weiterbildungen der Erfindung sind durch die Merkmale der Unteranprüche gekennzeichnet.

Es zeigen:
- Fig. 1: einen Querschnitt durch eine bekannte Ausführungsform des Vorsatzgeräts;
- Fig. 4: einen Querschnitt durch eine erfindungsgemäße Ausführungsform des Vorsatzgeräts.

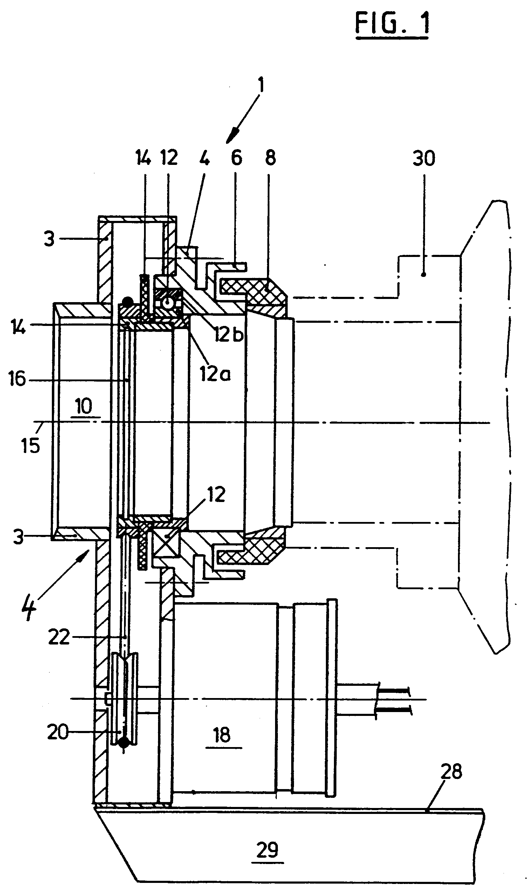

Die Fig. 1 zeigt einen Querschnitt durch ein bekanntes Vorsatzgerät, welches z. B. mit einem Befestigungselement 28 so an dem Kameragehäuse befestigt wird, daß die Gehäuseöffnung 10 mit dem Objektiv fluchtet. Das bekannte Vorsatzgerät 1 besitzt ein Gehäuse 4, durch welches sich eine zylindrische Gehäuseöffnung 10 hindurcherstreckt, deren Durchmesser etwa dem Durchmesser des Objektivs 30 entspricht. Zwischen dem kameraseitigen Gehäuseabschnitt 6 und dem Außenrand des Objektivs 30 ist ein Ring 8 vorgesehen, der am Objektiv 30 lösbar befestigbar ist und den kameraseitigen Gehäuseabschnitt 6 berührungsfrei und mit ausreichendem axialen Spiel überlappt oder untergreift. Durch den Ring 8 wird das Gehäuse so an das Objektiv angekoppelt, daß der durch die Gehäuseöffnung geschaffene Raum vor dem Linsensystem des Objektivs gegen seitlichen Einfall von Regen, Schnee, Schmutzpartikeln etc. zuverlässig abgeschirmt ist.

Der frontseitige Gehäuseabschnitt 3 besitzt einen Ansatz 3a, auf dem ein Elektromotor 18 befestigt ist, dessen Welle 19 parallel zur Objektivachse 15 verläuft und eine Antriebsrolle 20 trägt, die von dem frontseitigen Gehäuseabschnitt 3 umhüllt ist.

In der Gehäuseöffnung 10 ist ein transparentes Schutzelement 16, z. B. eine ebene oder gewölbte Linse, Scheibe oder Filter, quer über die gesamte Gehäuseöffnung angeordnet und von einer ringförmigen Fassung 14 aufgenommen. Die Fassung 14 sitzt in dem Innenring 12a eines Kugellagers 12, welches in die Innenwand des mittleren Gehäuseabschnitts 4 eingelassen ist. Das transparente Schutzelement 16 ist mittels des Kugellagers 12 drehbar gelagert und verschließt die Gehäuseöffnung 10, so daß Niederschläge, Schnee, Schmutzpartikel durch die Gehäuseöffnung 10 nur bis zu dem transparenten Schutzelement 16 gelangen können.

Der Elektromotor 18 treibt über die Antriebsrolle 20 und einen Transmissionsriemen 22 die Fassung 14 des Schutzelements 16 in schneller Drehbewegung an. Dadurch werden Regentropfen, Schnee oder Staubpartikel, welche sich evtl. auf der Oberfläche des Schutzelements 10 niedergeschlagen haben, zentrifugal weggeschleudert, so daß das Schutzelement bei Aktivierung des Antriebs 18, 20, 22 stets eine saubere, feuchtigkeits- und schmutzfreie Oberfläche besitzt. Die mit dem Vorsatzgerät ausgestattete Kamera kann daher auch bei anhaltendem Regen oder Schnee ohne Beeinträchtigung der Bildqualität benutzt werden.

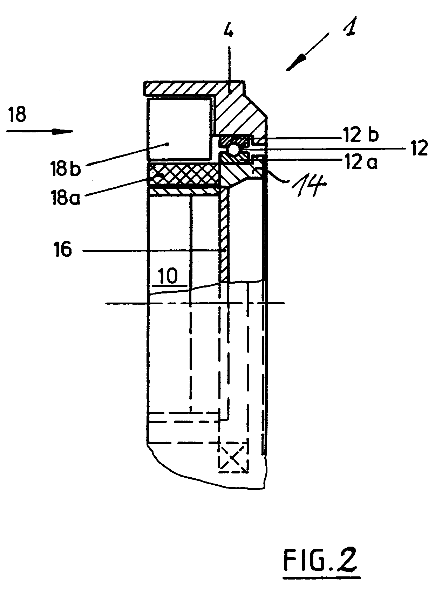

Fig. 2 zeigt einen Querschnitt durch ein Vorsatzgerät nach der Erfindung. Erfindungsgemäß ist das Schutzelement 16 in einer ringförmigen Fassung 14 eingefaßt und erstreckt sich über die gesamte Gehäuseöffnung 10. Die Fassung 14 sitzt in dem Innenring 12a eines Kugellagers 12, dessen Außenring 12b an der Innenwand des Gehäuses 4 des Vorsatzgeräts befestigt ist. Die Fassung 12 des Schutzelements 16 ist an ihrem Außenumfang als Läufer 18a eines Elektromotors 18 ausgebildet, dessen Stator 18b am Innenumfang des Gehäuses 4 befestigt ist. Bei dieser Ausführungsform ist somit der Elektromotor in das rohrförmige Gehäuse 4 integriert, der Läufer 18a ist ringförmig um das Schutzelement 16 ausgebildet, der Stator 18b ist ebenfalls ringförmig fest am Gehäuse, dem Läufer 18a eng benachbart, angeordnet.

Zwischen dem Schutzelement 16 und dem Linsensystem des Objektivs 30 läßt sich eine Heizvorrichtung vorsehen, die z. B. batteriegespeist ist und verhindert, daß bei niedrigen Temperaturen eine Eisbildung in diesem Zwischenraum bzw. an dem Schutzelement oder der Vorderseite des Linsensystems stattfindet.

Frontseitig an der Fassung 14 des Schutzelements 16 ist ein Filtergewinde (nicht dargestellt) vorgesehen, welches dem Benutzer gestattet, Vorsatzfilter der betreffenden Kamera bzw. des betreffenden Objektivs auch unmittelbar vor das rotierende Schutzelements 16 zu setzen, so daß das Vorsatzfilter ebenfalls die Drehbewegung des Schutzelements 16 mitmacht.

## Patentansprüche

1. Vorsatzgerät (1) für Kameras,
mit einem Gehäuse (4), durch das sich eine zylindrische Gehäuseöffnung (10) hindurcherstreckt, deren Durchmesser mindestens dem Durchmesser des Objektivs der Kamera entspricht, mit einem die Gehäuseöffnung (10) verschließenden, drehbar gelagerten transparenten Schutzelement (16), mit einem einen Elektromotor (18) aufweisenden Antrieb zum Antreiben des Schutzelements (16) in eine Drehbewegung,
mit einem Befestigungselement zum Befestigen des Vorsatzgeräts (1) an der Kamera in einer Position, in der die Gehäuseöffnung (10) mit dem Objektiv fluchtet, und mit einer Fassung (14) am Rand des Schutzelements (16),
dadurch gekennzeichnet, daß die Fassung (14) des Schutzelements (16) als Läufer (18a) des Elektromotors (18) ausgebildet ist, und daß die Statorwicklung (18b) des Elektromotors (18) um die Fassung (14) des Schutzelements (16) herum am Gehäuse (4) befestigt ist.

2. Vorsatzgerät nach Anspruch 1,
dadurch gekennzeichnet, daß das Schutzelement (16) mittels der Fassung (14) in dem Innenring (12a) eines Kugellagers (12) sitzt, dessen Außenring (12b) in der die Statorwicklungen (18b) tragenden Wandung des Gehäuses (4) befestigt ist.

3. Vorsatzgerät nach Anspruch 1 oder 2,
dadurch gekennzeichnet, daß das Gehäuse (4) kameraseitig mit einem Ring den Außenrand des Objektivs über- und unterlappt.

4. Vorsatzgerät nach Anspruch 3,
dadurch gekennzeichnet, daß der Ring aus elastischem Material besteht und am Objektiv lösbar befestigbar ist.

5. Vorsatzgerät nach einem der Ansprüche 3 oder 4,
dadurch gekennzeichnet, daß in dem Ring und/oder in dem Gehäuse (4) zwischen dem Schutzelement (16) und dem Ring Entlüftungsöffnungen vorgesehen sind.

6. Vorsatzgerät nach einem der vorstehenden Ansprüche,
dadurch gekennzeichnet, daß der Elektromotor (18) von Batterien gespeist ist.

7. Vorsatzgerät nach Anspruch 6,
dadurch gekennzeichnet, daß die Batterien in dem Gehäuse (4) oder dem Befestigungselement angeordnet sind.

8. Vorsatzgerät nach einem der vorstehenden Ansprüche,
dadurch gekennzeichnet, daß das Schutzelement (16) eine ebene Glasscheibe ist.

9. Vorsatzgerät nach einem der Ansprüche 1 bis 7,
dadurch gekennzeichnet, daß das Schutzelement (16) als Linse ausgebildet ist.

10. Vorsatzgerät nach einem der vorstehenden Ansprüche,
dadurch gekennzeichnet, daß das Schutzelement (16) als Filter ausgebildet ist.

11. Vorsatzgerät nach einem der vorstehenden Ansprüche,
dadurch gekennzeichnet, daß eine Sprühvorrichtung mit einem Reservoir für Sprühflüssigkeit und mit auf das Schutzelement (16) gerichteten Sprühdüsen vorgesehen ist.

12. Vorsatzgerät nach einem der vorstehenden Ansprüche,
dadurch gekennzeichnet, daß Ventilationsflügel an der Fassung (14) des Schutzelements (16) vorgesehen sind.

13. Vorsatzgerät nach einem der vorstehenden Ansprüche,
dadurch gekennzeichnet, daß im Zwischenraum zwischen dem Schutzelement (16) und dem Linsensystem des Objektivs eine Heizvorrichtung angeordnet ist.

14. Vorsatzgerät nach einem der vorstehenden Ansprüche,
dadurch gekennzeichnet, daß frontseitig an der Fassung (14) des Schutzelements (16) ein Filtergewinde vorgesehen ist, welches demjenigen des Objektivs entspricht.

## Claims

1. Attachment (1) for cameras, comprising
a housing (4), through which extends a cylindrical opening (10) the diameter of which corresponds at least to the diameter of the camera lens,
a rotatably mounted, transparent protecting member (16) which closes the housing opening (10),
a drive, which includes an electric motor (18) and serves to drive the protecting member (16) so that it spins, fixing means for the fixing of the attachment (1) to the camera in a position in which the housing opening (10) is aligned with the camera lens, and
a mounting (14) on the rim of the protecting member (16), characterised in that the mounting (14) of the protecting member (16) is made as a rotor (18a) of the electric motor (18), and that the stator winding (18b) of the electric motor (18) is attached around the mounting (14) of the protecting member (16) on the housing (4).

2. Attachment according to claim 1, characterised in that the protecting element (16) is seated, via the mounting (14), in the inner ring (12a) of a ball bearing (12), the outer ring (12b) of which is fixed in the wall of the housing (4) which carries the stator winding (18b).

3. Attachment according to claim 1 or 2, characterised in that at the camera the housing (4) extends, via a ring, over and under the outer rim of the lens.

4. Attachment according to claim 3, characterised in that the ring is of elastic material and may be removably mounted on the lens.

5. Attachment according to claim 3 or 4, characterised in that venting holes are provided in the ring and/or in the housing (4) between the protecting member (16) and the ring.

6. Attachment according to any one of the preceding claims, characterised in that the electric motor (18) is powered by batteries.

7. Attachment according to claim 6, characterised in that the batteries are situated in the housing (4) or in the fixing means.

8. Attachment according to any one of the preceding claims, characterised in that the protecting member (16) is a planar glass plate.

9. Attachment according to any one of claims 1 to 7, characterised in that the protecting element (16) is made as a lens.

10. Attachment according to any one of the preceding claims, characterised in that the protecting element (16) is made as a filter.

11. Attachment according to any one of the preceding claims, characterised in that a spraying device is provided, which comprises a tank for spraying liquid and spraying nozzles directed onto the protecting member (16).

12. Attachment according to any one of the preceding claims, characterised in that venting wings are provided on the mounting (14) of the protecting member (16).

13. Attachment according to any one of the preceding claims, characterised in that in the space between the protecting member (16) and the system of optical elements of the lens is situated a heater.

14. Attachment according to any one of the preceding claims, characterised in that a filter thread is provided at the front side of the mounting (14) of the protecting member (16), which corresponds to that of the lens.

## Revendications

1. Adaptateur (1) pour appareils de prise de vues, comportant un boîtier, à travers lequel s'étend une ouverture de boîtier (10) cylindrique, dont le diamètre correspond au moins au diamètre de l'objectif de l'appareil de prise de vues, un élément de protection transparent (16), supporté en étant capable de rotation, obturant l'ouverture du boîtier (10), un entraînement présentant un moteur électrique (18), pour entraîner en rotation l'élément de protection (16),
un élément de fixation pour fixer l'adaptateur (1) sur l'appareil de prise de vues dans une position dans laquelle l'ouverture de boîtier (10) est en alignement avec l'objectif de l'appareil de prise de vues, et avec une monture (14), en bordure de l'élément de protection (16),
caractérisé en ce que la monture (14) de l'élément de protection (16) est conformée en tant qu'induit (18a) d'un moteur électrique (18), et en ce que le bobinage formant stator (18b) du moteur électrique est fixé autour de la monture (14) de l'élément de protection (16).

2. Adaptateur selon la revendication 1,
caractérisé en ce que l'élément de protection (16) repose au moyen de la monture (14) au centre de la bague intérieure (12a) du roulement à billes (12), dont la bague extérieure (12b) est fixée dans la paroi du boîtier (4) portant les bobinages formant stator.

3. Adaptateur selon l'une quelconque des revendications 1 ou 2,
caractérisé en ce que le boîtier (4) du côté de l'appareil de prise de vues recouvre ou vient s'encastrer, avec une bague, sous la bordure extérieure de l'objectif.

4. Adaptateur selon la revendication 3,
caractérisé en ce que la bague est constituée de matériau élastique et est fixée de manière amovible sur l'objectif.

5. Adaptateur selon l'une quelconque des revendications 3 ou 4,
caractérisé en ce que des ouvertures d'aération sont prévues dans la bague et/ou dans le boîtier (4) entre l'élément de protection (16) et la bague.

6. Adaptateur selon l'une quelconque des revendications précédentes,
caractérisé en ce que le moteur électrique (18) est alimenté par des piles.

7. Adaptateur selon la revendication 6,
caractérisé en ce que les piles sont disposées dans le boîtier (4) ou dans l'élément de fixation.

8. Adaptateur selon l'une quelconque des revendications précédentes,
caractérisé en ce que l'élément de protection (16) est une plaque de verre plane.

9. Adaptateur selon l'une quelconque des revendications 1 à 7,
caractérisé en ce que l'élément de protection (16) est conformé comme une lentille.

10. Adaptateur selon l'une quelconque des revendications précédentes,
caractérisé en ce que l'élément de protection (16) est conformé comme un filtre.

11. Adaptateur selon l'une quelconque des revendications précédentes,
caractérisé en ce qu'un dispositif de pulvérisation comportant un réservoir pour un liquide de pulvérisation et avec des buses de pulvérisation orientées vers l'élément de protection (16) est prévu.

12. Adaptateur selon l'une quelconque des revendications précédentes,
caractérisé en ce que des ailes de ventilation sont prévues sur la monture (14) de l'élément de protection (16).

13. Adaptateur selon l'une quelconque des revendications précédentes,
caractérisé en ce qu'un dispositif de chauffage est monté dans l'espace intermédiaire entre l'élément de protection (16) et le système de lentilles de l'objectif.

14. Adaptateur selon l'une quelconque des revendications précédentes,
caractérisé en ce qu'un taraudage pour filtre est prévu, sur le côté frontal, sur la monture (14) de l'élément de protection (16), ledit taraudage correspondant au filetage de l'objectif.
